# EUROPEAN PATENT SPECIFICATION

(11) **EP 4 033 725 B1**
(45) Date of publication and mention of the grant of the patent: **19.02.2025**
(21) Application number: 21152862.5
(22) Date of filing: 22.01.2021
(51) Int. Cl.: H04L 67/10, H04L 67/00, G06F 21/57, G06F 8/65, G06F 21/62, G06F 21/64

(54) **METHODS AND DEVICES FOR BLOCKCHAIN-BASED PATCH MANAGEMENT**
VERFAHREN UND VORRICHTUNGEN FÜR BLOCKCHAIN-BASIERTE PATCH-VERWALTUNG
PROCÉDÉS ET DISPOSITIFS DE GESTION DE TIMBRE À BASE DE CHAÎNE DE BLOCS

(43) Date of publication of application: 27.07.2022
(73) Proprietor: Nokia Technologies Oy, 02610 Espoo (FI)
(72) Inventor: PONTECORVI, Matteo, 91120 Palaiseau (FR); SIGNORINI, Matteo, 91120 Palaiseau (FR)
(74) Representative: Nokia EPO representatives

(56) References cited:
- WO-A2-2019/170173
- US-A1- 2020 242 249
- US-A1- 2020 374 105

## Description

### TECHNICAL FIELD

Blockchain-based device patch methods and devices are described. The patch methods may be used for example to provide an update to a device in a communication network.

### BACKGROUND

In a network, certain devices may require updates and configuration changes. Such changes need to be implemented in a secure, verifiable manner in the sense that they should only be made by an authorized party. A third party, with or without malicious intentions, should not be able to carry out such changes. Blockchains may be used in such a context.

US2020/242249A1 discloses a system for recording device lifecycle transactions in a blockchain network. WO2019/170173A2 discloses a system for managing cybersecurity vulnerabilities using blockchain networks. US2020/0374105A1 discloses a system for managing read access of data in a blockchain.

### SUMMARY

The scope of protection is defined by the independent claims. An embodiment concerns a second device for providing a patch to a first device using a blockchain managed by a blockchain network comprising a plurality of blockchain network devices for providing said patch to said first device, said second device comprising:
- means for determining, based on information stored in said blockchain, at least a first device to be patched;
- means for sending, to the blockchain network, a patch request comprising patch content data for storage in the blockchain for obtention by said at least first device, and an identifier of said at least first device to be patched, wherein said patch request further comprises at least one prerequisite criterion to be met by said at least first device to allow said patch to be applied.
- means for receiving, from the blockchain network, a notification when all of said at least first devices to be patched have been successfully patched.

According to an embodiment of the second device, said information stored in said blockchain is a patch status of said at least first device stored.

According to an embodiment of the second device, said patch request further comprises information indicative of whether said patch is to be pushed by said blockchain network to said at least first device, or whether said patch is to be pulled from said blockchain by said at least first device.

According to an embodiment of the second device, the second device further comprises means for receiving from said blockchain network a notification when all of said at least first devices to be patched have been successfully patched.

An embodiment concerns a blockchain network device for use in a blockchain network comprising a plurality of blockchain network devices, said blockchain network managing a blockchain, for providing a patch to a first device, said blockchain network device comprising:
- means for receiving, from a second device a patch request comprising patch content data and an identifier of at least a first device to be patched, wherein said patch request further comprises at least one prerequisite criterion to be met by said at least first device to allow said patch to be applied;
- means for determining that said at least first device in said patch request meets at least one prerequisite criterion;
- means for adding said patch request to the blockchain;
- means for publishing said patch request in said blockchain if said determination is positive,
- means for sending, to the second device from which the patch request was received, a confirmation that the patch request was added to the blockchain.
- means for receiving a patch report from at least a first device to be patched, further to application of said patch by said at least first device, said patch report comprising information indicative of the patch operations performed by said at least first device during patch application and information indicative of the actual outcome of said patch application;- means for determining whether said information indicative of the actual outcome of said patch application matches information indicative of an expected outcome of said patch application in said patch request and in the affirmative, entering information indicative of the update status of the first device from which the patch report was received; and- means for sending a notification to said second device from which the patch request was received when all of said at least first device to be patched have been successfully patched.

According to an embodiment, the blockchain network device further comprises means for pushing said patch content data to said at least first device, if said patch request contains an information that the patch is to be pushed to said at least first device,

According to an embodiment, the blockchain network device further comprises
- means for receiving a request from at least a first device to be patched if said patch request contains an information that the patch is to be pulled, said request comprising data identifying the first device having sent the request;
- means for determining whether a patch request containing said identifier is present in the blockchain and in the affirmative sending data indicative of a location of said patch content data within said blockchain to said first device having sent the request enabling said first device having sent the request to obtain said patch content data.

An embodiment of the invention concerns a first device for receiving a patch from a blockchain managed by a blockchain network comprising a plurality of blockchain network devices, said first device comprising
- means for obtaining content of the patch from the blockchain;
- means for applying the patch using said content; and
- means for sending, when the patch has been correctly applied, a patch report to the blockchain network, said patch report comprising information indicative of patch operations performed by said first device during patch application and information indicative of the actual outcome of said patch application.

According to an embodiment of the first device, said means for obtaining content of the patch are configured to receive said content through a push from a blockchain network device.

According to an embodiment of the first device, said means for obtaining content of the patch are configured to audit the blockchain to determine whether a patch request for patching said first device is present, and in the affirmative for obtaining information from said blockchain enabling said first device to pull said patch content from said blockchain.

An embodiment concerns a method for using a blockchain managed by a blockchain network comprising a plurality of blockchain network devices for providing a patch to a first device, said method comprising, at a blockchain network device:
- receiving, from a second device a patch request comprising patch content data and an identifier of at least a first device to be patched, wherein said patch request further comprises at least one prerequisite criterion to be met by said at least first device to allow said patch to be applied;
- determining that said at least first device in said patch request meets at least one prerequisite criterion and adding said patch request to the blockchain and publishing said patch request in said blockchain if said determination is positive,
- sending, to the second device from which the patch request was received, a confirmation that the patch request was added to the blockchain;
receiving a patch report from at least a first device to be patched, further to application of said patch by said at least first device, said patch report comprising information indicative of the patch operations performed by said at least first device during patch application and information indicative of the actual outcome of said patch application;- determining whether said information indicative of the actual outcome of said patch application matches information indicative of an expected outcome of said patch application in said patch request and in the affirmative, entering information indicative of the update status of the first device from which the patch report was received; and sending a notification to said second device from which the patch request was received when all of said at least first device to be patched have been successfully patched.

A method for using a blockchain managed by a blockchain network comprising a plurality of blockchain network devices for providing a patch to a first device, said method comprising, at said first device:
- obtaining content of the patch from the blockchain;
- applying the patch using said content; and
- when the patch has been correctly applied, sending a patch report to the blockchain network, said patch report comprising information indicative of patch operations performed by said first device during patch application and information indicative of the actual outcome of said patch application.

### BRIEF DESCRIPTION OF THE DRAWINGS

Example embodiments will be more fully understood from the detailed description given herein below and the accompanying drawings, which are given by way of illustration only.
FIG. 1 is a diagram of a system according to an exemplary embodiment.
FIG. 2a is the first part of a flow sequence diagram according to an exemplary embodiment.
FIG. 2b is the second part of a flow sequence diagram according to an exemplary embodiment.
FIG. 3 is a block diagram of a device adapted to implement a method according to an exemplary embodiment.
FIG. 4 is a block diagram illustrating a transaction record in a blockchain according to an exemplary embodiment.

It should be noted that these figures are intended to illustrate the general characteristics of methods, structure and/or materials utilized in certain example embodiments and to supplement the written description provided below. These drawings are not, however, to scale and may not precisely reflect the precise structural or performance characteristics of any given embodiment, and should not be interpreted as defining or limiting the range of values or properties encompassed by example embodiments. The use of similar or identical reference numbers in the various drawings is intended to indicate the presence of a similar or identical element or feature.

### DETAILED DESCRIPTION

Various exemplary embodiments will now be described more fully with reference to the accompanying drawings. However, specific structural and functional details disclosed herein are merely representative for purposes of describing example embodiments. The exemplary embodiments may be embodied in many alternate forms and should not be construed as limited to only the embodiments set forth herein. It should be understood that there is no intent to limit example embodiments to the particular forms disclosed.

It should be appreciated by those skilled in the art that any functions, engines, block diagrams, flow diagrams, state transition diagrams and / or flowcharts herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processing apparatus, whether or not such computer or processor is explicitly shown.

Each described function, engine, block, step can be implemented in hardware, software, firmware, middleware, microcode, or any suitable combination thereof. If implemented in software, the functions, engines, blocks of the block diagrams and/or flowchart illustrations can be implemented by computer program instructions / software code, which may be stored or transmitted over a computer-readable medium, or loaded onto a general purpose computer, special purpose computer or other programmable processing apparatus and / or system to produce a machine, such that the computer program instructions or software code which execute on the computer or other programmable processing apparatus, create the means for implementing the functions described herein.

In the present description, functional blocks denoted as "means configured to perform ..." (a certain function) shall be understood as functional blocks comprising circuitry that is adapted for performing or configured to perform a certain function. A means being configured to perform a certain function does, hence, not imply that such means necessarily is performing said function (at a given time instant). Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

Although a flow chart may describe the operations as a sequential process, many of the operations may be performed in parallel, concurrently or simultaneously. In addition, the order of the operations may be re-arranged. A process may be terminated when its operations are completed, but may also have additional steps not included in the figure. A process may correspond to a method, function, procedure, subroutine, subprogram, etc. When a process corresponds to a function, its termination may correspond to a return of the function to the calling function or the main function.

As disclosed herein, the term "storage medium," "computer readable storage medium" or "non-transitory computer readable storage medium" may be any physical media that can be read, written or more generally accessed by a computer / a processing device. Examples of computer storage media include, but are not limited to, a flash drive or other flash memory devices (e.g. memory keys, memory sticks, USB key drive), CD-ROM or other optical storage, DVD, magnetic disk storage or other magnetic storage devices, solid state memory, memory chip, RAM, ROM, EEPROM, smart cards, a relational database management system, a traditional database, or any other suitable medium that can be used to carry or store program code in the form of instructions or data structures which can be read by a computer processor. Also, various forms of computer-readable medium may be used to transmit or carry instructions to a computer, including a router, gateway, server, or other transmission device, wired (coaxial cable, fiber, twisted pair, DSL cable) or wireless (infrared, radio, cellular, microwave). The instructions may include code from any computer-programming language, including, but not limited to, assembly, C, C++, Basic, SQL, MySQL, HTML, PHP, Python, Java, Javascript, etc. Embodiments of a computer-readable medium include, but are not limited to, both computer storage media and communication media including any medium that facilitates transfer of a computer program from one place to another. Specifically, program instructions or computer readable program code to perform embodiments described herein may be stored, temporarily or permanently, in whole or in part, on a non-transitory computer readable medium of a local or remote storage device including one or more storage media.

Furthermore, example embodiments may be implemented by hardware, software, firmware, middleware, microcode, hardware description languages, or any combination thereof. When implemented in software, firmware, middleware or microcode, the program code or code segments to perform the necessary tasks may be stored in a machine or computer readable medium such as a computer readable storage medium. When implemented in software, a processor or processors will perform the necessary tasks. For example, as mentioned above, according to one or more example embodiments, at least one memory may include or store computer program code, and the at least one memory and the computer program code may be configured to, with at least one processor, cause a network element or network device to perform the necessary tasks. Additionally, the processor, memory and example algorithms, encoded as computer program code, serve as means for providing or causing performance of operations discussed herein.

A code segment of computer program code may represent a procedure, function, subprogram, program, routine, subroutine, module, software package, class, or any combination of instructions, data structures or program statements. A code segment may be coupled to another code segment or a hardware circuit by passing and/or receiving information, data, arguments, parameters or memory contents. Information, arguments, parameters, data, etc. may be passed, forwarded, or transmitted via any suitable technique including memory sharing, message passing, token passing, network transmission, etc.

The terms "including" and/or "having," as used herein, are defined as comprising (i.e., open language). The term "coupled," as used herein, is defined as connected, although not necessarily directly, and not necessarily mechanically. Terminology derived from the word "indicating" (e.g., "indicates" and "indication") is intended to encompass all the various techniques available for communicating or referencing the object/information being indicated. Some, but not all, examples of techniques available for communicating or referencing the object/information being indicated include the conveyance of the object/information being indicated, the conveyance of an identifier of the object/information being indicated, the conveyance of information used to generate the object/information being indicated, the conveyance of some part or portion of the object/information being indicated, the conveyance of some derivation of the object/information being indicated, and the conveyance of some symbol representing the object/information being indicated.

Although the terms first, second, etc. may be used herein to describe various elements, these elements should not be limited by these terms. These terms are only used to distinguish one element from another. For example, a first element could be termed a second element, and similarly, a second element could be termed a first element, without departing from the scope of this disclosure. As used herein, the term "and/or," includes any and all combinations of one or more of the associated listed items.

According to example embodiments, network elements, network devices, data servers, network resource controllers, network apparatuses, clients, routers, gateways, network nodes, computers, cloud-based servers, web servers, application servers, proxies or proxy servers, or the like, may be (or include) hardware, firmware, hardware executing software or any combination thereof. Such hardware may include processing or control circuitry such as, but not limited to, one or more processors, one or more CPUs, one or more integrated circuits one or more controllers, one or more ALUs, one or more DSPs, one or more microcomputers, one or more FPGAs, one or more SoCs, one or more PLUs, one or more microprocessors, one or more ASICs, or any other device or devices capable of responding to and executing instructions in a defined manner.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

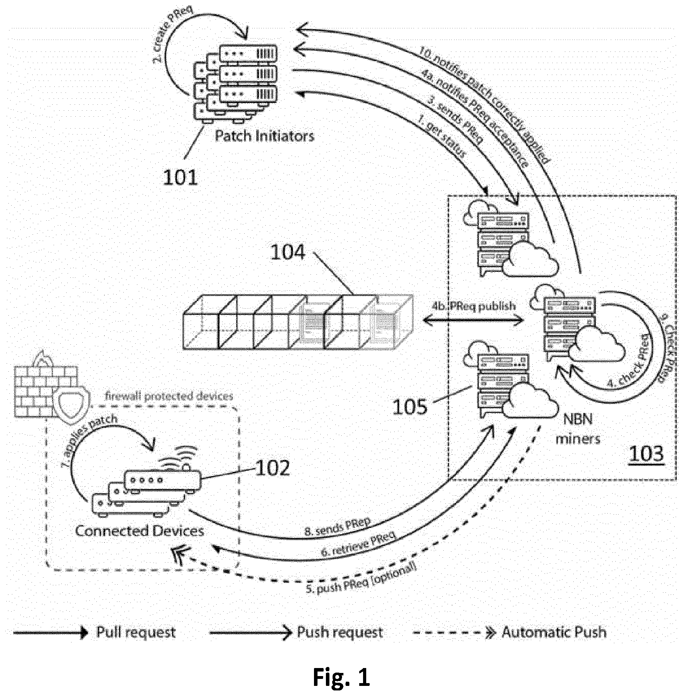

FIG. 1 is a block diagram of a system in which an exemplary embodiment may be implemented. The system comprises one or more remote devices called patch initiators, PI, 101, one or more network devices called connected devices CD 102, and a blockchain network BN 103 storing a blockchain 104. Single and double digit numbers 1 to 10 in FIG. 1 indicate certain steps of the communication between the different entities according to the exemplary embodiment. Blockchain network 103 naturally comprises a plurality of blockchain nodes 105.

In the system of FIG. 1, network devices such as but not limited to the connected devices 102 are managed by the patch initiators 101. A connected device 102 can for example be updated and/or configured ('patched') by a patch initiator 101. A patch can, as non-limiting example, comprise a change to a file system, a data base, any data structure, system configuration or software update. A patch can for example consist in a network interface configuration file in a Linux system in case the original configuration file was changed and does not allow the connected device to connect to the internet anymore.

According to an exemplary embodiment, a patch initiator may be any kind of network device, for example a server, a computer, or any other device capable of and configured to carry out the tasks described herein.

According to an exemplary embodiment, a connected device may be any kind of network device, typically including but not limited to a portable device such as a smart phone, a cellular phone or a wearable device, a tablet, a computer, a server, an Internet of Things (IoT) device, a personal digital assistant... or any other device connected to the network that may need to be updated and / or configured. According to an exemplary embodiment, connected device 102 contains an agent, which may be a software component, for understanding and applying changes required by a patch initiator and for communicating with the blockchain network 103 as described later.

Blockchain network 103 is a network of computers or servers or other processing devices which store and process a blockchain dataset 104. As is well known, a blockchain is a distributed ledger of transactions linked through cryptography recorded in a verifiable manner. Each block comprises a cryptographic hash of the previous block, a timestamp, and the transaction data for one (or more) transactions. A common protocol among the nodes 105 of the blockchain network specifies how a new block is created and validated before being added to the blockchain. The data in any given block cannot be changed without changing the data in all subsequent blocks. Various nodes of the blockchain network store copies of the blockchain and a consensus protocol is used to keep the copies synchronized.

According to an embodiment, it is assumed that the communications between the different entities mentioned above are authenticated and encrypted, the blockchain technology being permissioned.

According to an exemplary embodiment, transactions to be recorded in the blockchain are contained in patch requests ('PReq') which are messages sent by patch initiators and patch reports ('PRep') which are messages sent by the connected devices. These patch requests and patch reports are validated by the blockchain 103, ideally in all blockchain nodes 105. A patch request PReq contains data characterizing an opening transaction of a smart contract ('SC'). The opening transaction comprises the terms of the smart contract between a patch initiator and the connected devices 102 for carrying out the patching process. Note that as explained in further detail below, a plurality of connected devices can be patched using a single smart contract. The smart contract SC is augmented by data ('DSC') which comprises the data of the patch itself (e.g. a new version of a piece of software). Both the transaction SC and the DSC are combined in the PReq sent to the blockchain network.

According to the present embodiment, the DSC is stored within the blockchain network and a connected device obtains the DSC from this blockchain network. 'The DSC is treated as part of the transaction by the blockchain network, i.e. submitted to the same approval rules and stored in the same block as the transaction. Data of a patch is thus stored redundantly in a plurality of blockchain nodes 105, instead of being stored only in a single device, i.e. patch initiator 101.

The fact that the patch data is stored in a plurality of blockchain nodes improves security by reducing the impact of storage failure at a single device storing the data. This also reduces the impact of unavailability of the patch data if one or more devices storing the data are unreachable or unresponsive - in this case, an alternate blockchain node may provide the patch data and patch management is not jeopardized by the failure of a single device or network link, or even several devices or network links. The chances of an attacker being able to manipulate the link between the connected device and the device storing the patch data (e.g. using a Denial of Service (DoS) attack) are reduced, because there are in effect several paths available. Moreover, storing patch data in the blockchain adds an additional level of security since it limits the possibility of corruption of patch data in one of the blockchain nodes.

Scalability is also improved by reducing bottleneck issues when many connected devices require a same patch at the same time or within a limited timeframe, because several blockchain devices can provide the patch data to different connected devices over different links. This may be the case if there are numerous connected devices, for example in an IoT scenario. While opening transaction data and closing transaction data may be of limited size, the patch data itself may be of any size, so depending on the context, bandwidth may be of prime importance to allow patching to occur within an acceptable timeframe.

According to an exemplary embodiment, a patch request PReq comprises the data listed in Table 1 with regard to the transaction SC. Data fields will be referred to as SC['x'] hereafter, where 'SC' stands for Smart Contract and 'x' designates the field. Depending on the application, not all fields listed are mandatory. Additional fields may also be present.

**Table 1**

| **Field number** | **Type of data** |
|---|---|
| SC[a] | Patch type |
| SC[b] | Patch identifier |
| SC[c] | One or more patch dependencies |
| SC[d] | A list of one or more connected devices |
| SC[e] | An indicator of whether the patch can be pulled or is to be pushed |
| SC[f] | A hash of the patch data (DSC) |
| SC[g] | Data indicative of one or more expected patch outcomes (e.g. one or more hashes representative of the outcome or outcomes) after patch application |
| SC[h] | Timestamp |
| SC[i] | Hash of the transaction |

Field SC[a] contains a patch type. The patch type may for example 'firmware update' or 'settings update' or identify any other type of patch.

Field SC[b] is a unique patch identifier.

Field SC[c] indicates prerequisite conditions for the patch to be allowed for the device or devices listed in field SC[d] described below. These conditions are called 'dependencies' in the present description. Dependencies may for example be descriptive of one or more previous patches which need to be present in a connected device for the new patch to be applicable. For example, dependencies may be implemented through lists of hashes representative of the expected outcomes of previous patches. Other types of prerequisite conditions than previous patches may of course be coded here. For example, the data may indicate that a certain software component is not installed as a condition to install a patch.

Field SC[d] lists one or more devices that should be patched. The list of devices may take the form, for each connected device in the list, of a device ID and a hashed value of a secret key stored in the connected device. This field also contains status data entries for each connected device in the list indicative of the patching status of the connected device.

Field SC[e] provides an indication as to whether the patch is to be pushed (e.g. by a blockchain node) or pulled (e.g. by a connected device).

Field SC[f] contains a hash of the patch data (DSC).

Field SC[g] contains criteria enabling a device to check whether a patch has been correctly applied. According to one exemplary embodiment, the criteria are embodied in a hash, respectively list of hashes, of an expected outcome, respectively a set of expected outcomes, of the patch after its application.

Field SC[h] contains a patch timestamp, which can be used to sequence patches in time.

Field SC[i] contains a hash of the entire transaction.

As indicated by the contents of field SC[e], a patch may be pushed or pulled. It is very common that connected devices be protected from incoming communications by one or more firewalls (which may e.g. prevent direct connection to an IP address) or rendered difficult to reach by the presence of mechanisms like network address translation, NAT, (according to which a large number connected devices may be mapped to a single public IP address). The ability for a connected device to pull a patch allows to mitigate these issues. In the case of a firewall for example, settings would not need to be altered beyond the standard settings required for websurfing and the method described herein can be adjusted if custom ports/services are configured on the firewall.

Coming back to FIG. 1, in a step 1, a patch initiator 101 determines one or more connected devices to be patched. The patch initiator queries the blockchain 103 to retrieve the latest status, M, of a given connected device 102 or a plurality of statuses for a set of connected devices, e.g.by checking the blockchain for the presence of the connected devices' IDs and their status data in field SC[d] of the recorded transactions. For example, a patch initiator retrieves data relative to all transactions patching a given connected device taking into consideration only the transactions relevant to its own patches to determine the status of a connected device.

In a step 2, the patch initiator 101 prepares a smart contract SC under the form of the data in Table 1 and associates it with the smart contract data DSC. The smart contract SC comprises the logic of the update or patch and represents the metadata describing and revolving around the correct application of the patch, whereas the smart contract data contains the update or patch content or patch payload itself. An example of the logic of the update is 'update file xyz' or 'replace lines abc in a configuration file' - such information would be contained in field SC[g], in addition to the respective control hashes. Respective examples of the update content data or patch content data itself, i.e. the DSC, would then be an update software file or a set of configuration file lines.

According to a variant embodiment, the logic may define several patch updates to be made and the smart contract contains the corresponding data.

In a step 3, the patch initiator 101 sends both the smart contract SC opening transaction data and the patch data DSC to the blockchain within a single block, i.e. the patch request message 'PReq'. While it is not the purpose of the present description to detail the inner workings of a block chain which is known per se, this step of the process would according to one possible embodiment of the blockchain network comprise the patch initiator sending the patch request to all nodes of the block chain. According to other possible embodiments of the blockchain network, the patch initiators send the patch request to a specific subset of blockchain network nodes only.

In a step 4, the blockchain accepts and registers the PReq only if all the connected devices listed in SC[d] satisfy the dependencies listed in SC[c]. Nodes of the blockchain perform this check by analyzing the transactions recorded in the blockchain, i.e. the history of each connected device, and determining for each of the connected devices whether patches previously applied provided outcomes satisfying the dependencies listed in the newly received patch request. The purpose of this check is to make sure that the smart contract can - at least potentially - be closed by all devices listed. This would not be possible if a device does not satisfy the dependencies, since the patch could then not be applied, or at least not applied before the issue is corrected.

Within the particular embodiment of the blockchain mentioned above, the blockchain nodes carry out a consensus protocol to ensure that the majority of nodes come to the same conclusion with regard to the dependency check.

If the patch request PReq is accepted, the blockchain notifies the patch initiator accordingly (substep 4a). Within the particular embodiment of the blockchain mentioned above, this notification comprises each blockchain node notifying the patch initiator of the conclusion reached by the majority of nodes. Note that in FIG. 1, the outcome of the acceptation process by the blockchain network is positive, it may also be negative, and an appropriate notification is also sent in that case.

If the patch request PReq is accepted, the blockchain publishes the newly linked smart contract transaction (substep 4b) i.e. making it visible and accessible to devices such as the patch initiators or the connected devices.

In a step 5, the patch request having been accepted, the blockchain network 103 checks SC[f] whether the patch is to be pulled or pushed. If the patch is to be pulled, the nodes of the blockchain network do not act, as the connected device or devices will try to collect the patch by themselves. If the patch needs to be pushed, once the smart contract is published, the blockchain network sends the smart contract data DSC to all connected devices listed in SC[d].

As a non-limiting example, in the case of a leader-based blockchain protocol, the sending of a DSC may be performed by a lead node or a designated node.

According to a variant embodiment, the DSC is pushed by the blockchain network only after receiving a command for doing so from the patch initiator.

Note that the next step, step 6, is not carried out by connected devices to which the patch data DSC was pushed in step 5.

In step 6, the agent running on a connected device actively audits the blockchain, e.g. at given intervals, to determine whether a smart contract transaction containing a patch to be applied by the connected device is present. This is the case of a patch request for which SC[e] is indicative of the fact that a patch is to be pulled has been successfully registered and not yet taken into account by the connected device. The connected device sends the connected device's ID and the hash of its secret key H(P) to the blockchain network - a response is only provided if there is a smart contract transaction containing the CD ID and the hash of the secret key H(P) in field SC[d]. In that case, the blockchain network also provides a secure pointer to the patch data DSC to enable the connected device to download this data.

In a step 7, a connected device to be patched has now received the patch data, whether it was pushed or pulled. The fact that patch is directly received from an authenticated blockchain and verified against all its nodes, ensures it can be trusted. Indeed, at this point, the patch data has been verified by the blockchain nodes. Had the connected device received the patch data from another entity, external to the blockchain, such as the patch initiator, it would have needed to check the presence in the blockchain of a patch request associated with that particular patch in order to validate this patch. This would have resulted in additional messages.

The connected device checks patch integrity by determining whether the patch has been received without errors and in the affirmative, applies the patch and, if the patch is applied correctly, (e.g. without error messages, this assessment not being, at least within the present non-limiting example, based on the expected outcome as coded in the patch request message PReq), prepares a patch report message PRep and transmits it to the blockchain network..

The transaction data of the PRep has the same general structure as that of the PReq as described in Table 1, although some of its contents differ. In particular, the PRep contains a list of operations executed by the connected device in SC[c], an identifier of the device and a hash of its secret key in SC[d] and the resulting outcome of the patching process, recorded as a hash or set of hashes in SC[g]. The latter will enable the blockchain network to verify the successful application of the patch by the connected device.

In a step 8, the connected device sends the patch report message PRep to the blockchain network.

In a step 9, the blockchain network compares the hashes received in the PRep message with the values stored in field SC[g]. In case these values match, the blockchain network accordingly updates the corresponding patch status data entry in field SC[d] for the connected device to indicate that the connected device was correctly patched. The smart contract SC is considered closed when status data entries in field SC[d] indicate that all connected devices in the list have been correctly patched.

In a step 10, when the smart contract is considered closed, the blockchain network notifies the patch initiator of the positive outcome of its patch request. It is to be noted that the patch initiator can query the blockchain to check connected device update status progress at any time prior to receiving this notification of completion.

According to a variant embodiment, if the patch initiator notes an anomaly, it may trigger a recovery process. An anomaly may be detected before or after the smart contract is closed. In the former case, an anomaly can consist in a device being unreachable or a device not being able to be patched (e.g. no patching occurred during an expected timeframe).

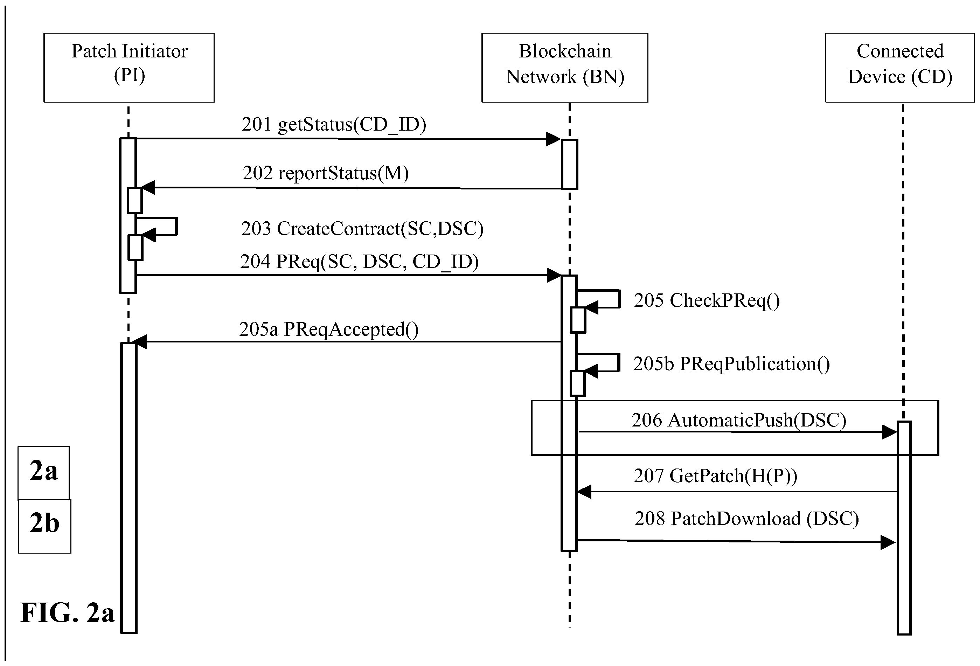

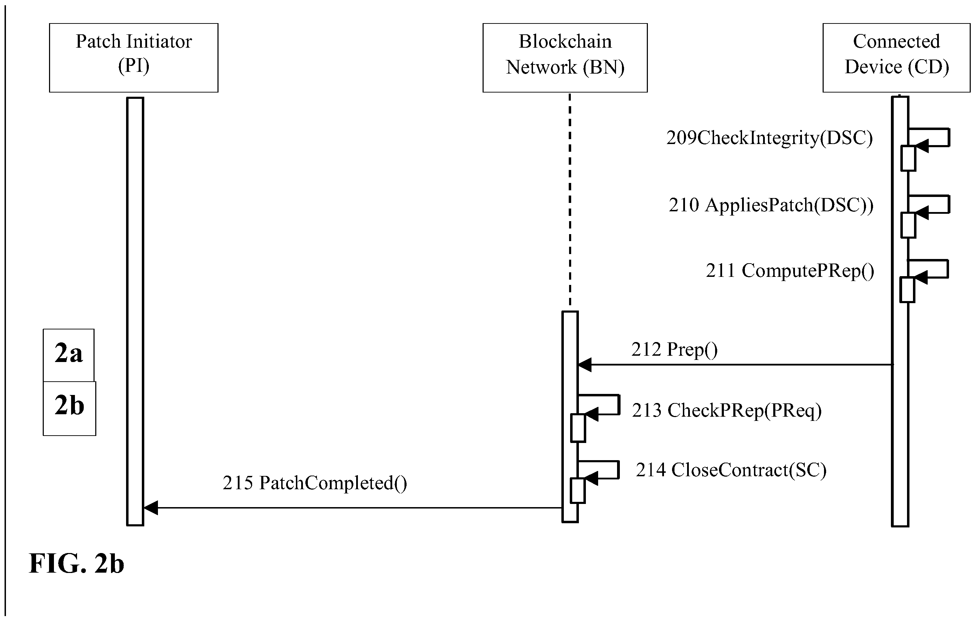

FIG. 2a and FIG. 2b represent detailed flow sequences between the patch initiator, the connected device and the blockchain network according to an exemplary embodiment. As can be seen from these figures, for the purpose of the patching process, the patch initiator and the connected device do not have direct interaction and as indicated earlier, this eliminates the messages that would be exchanges between these two entities. The blockchain network represents the channel between the patch initiator and the connected device allowing the update of the latter by the former. The process described below concerns a single connected device for the sake of clarity, but it can easily be extended to several connected devices, in particular to what has already been described in relation with FIG. 1 and Table 1.

In a step 201, the patch initiator 101 sends a message 'getStatus(CD_ID)' to the blockchain network 103 to obtain the latest patch status of a connected device with an identifier CD_ID stored in blockchain 104.

In a step 202, the blockchain network responds with a message 'reportStatus(M)' where M is the patch status of connected device CD_ID as explained with regard to step 1 of FIG. 1.

In a step 203, labelled CreateContract (SC, DSC), the patch initiator creates the smart contract.

In a step 204, the patch initiator sends the patch request PReq(SC, DSC, CD_ID) containing the smart contract transaction data including the connected device(s) identifier(s) and the patch data per se to the blockchain network.

In a step 205, labelled CheckPReq(), the blockchain network verifies whether the patch request PReq can be accepted or not.

In a step 205a, in case the outcome of step 205 was positive, the blockchain network sends a message PReqAccepted () to the patch initiator and publishes the transaction within the blockchain at a step 205b.

Step 206 is applied by the blockchain network when a patch can be pushed. It then sends a message, labelled 'AutomaticPush(DSC)' to the targeted connected device identified in the transaction data. The message contains the DSC.

Steps 207 and 208 concern the case in which the connected device pulls the patch and are only carried out if Step 206 was not carried out.

In a step 207, the connected device monitors the blockchain for the presence of an appropriate patch by sending a message labelled 'GetPatch(H(P))' which contains its hashed secret key. When a patch to be applied exists in the blockchain based on this hash, the blockchain network answers with a message labelled 'PatchDownload(DSC)' which contains the secure pointer mentioned earlier.

The connected device then performs an integrity check of the patch in a step 209 labelled 'CheckIntegrity(DSC)', applies the patch in a step 210 labelled 'AppliesPatch(DSC)' and if in case of successful application, generates a patch report PRep in a step 211 labelled 'ComputePRep()'. The patch report PRep is sent to the blockchain network in a message 212 labelled 'PRep()'. It constitutes the closing transaction of a smart contract seen from the point of view of a connected device.

In a step 213 labelled 'CheckPRep(PRep)' corresponding to step 9 of FIG. 1, the blockchain network verifies that the patch has been correctly applied and if this is the case, updates the contents of the smart contract transaction data in a step 214.

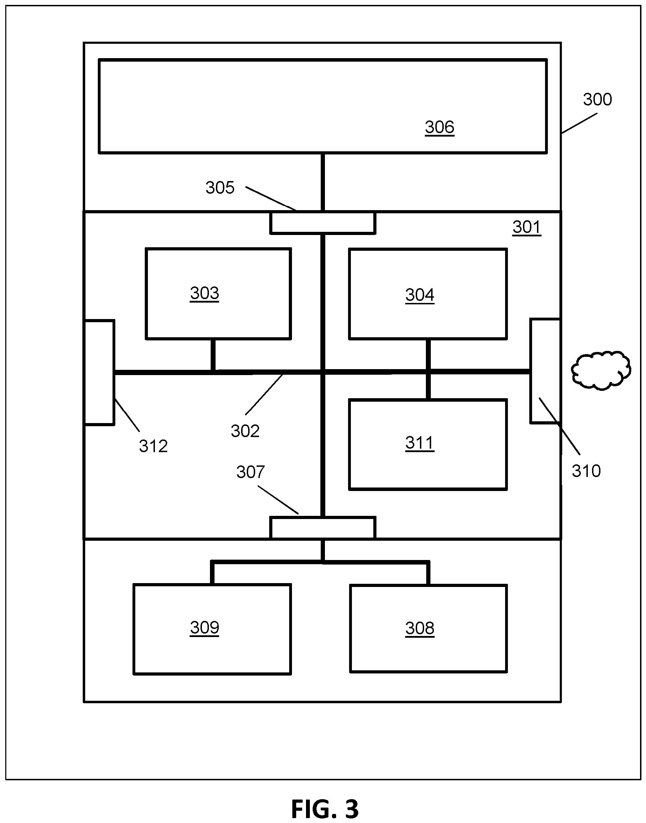

Lastly, in a step 215, the blockchain network informs the patch initiator that the smart contract has been closed (supposing here that it could be closed based on a single connected device's patching being successful). FIG. 3 is a block diagram of a device 300 that, according to an exemplary embodiment, can be used to implement any one of the patch initiator 101, the connected device 102, or one or more devices 105 from the blockchain network 104. The device 300 comprises a printed circuit board 301 on which a communication bus 302 connects a processor 303, a random access memory 304, a storage medium 311, an interface 305 for connecting a display 306, a series of connectors 307 for connecting user interface devices or modules such as a mouse or trackpad 308 and a keyboard 309, a wireless network interface 310 and a wired network interface 312. Depending on the functionality required, the patch initiator, the connected device or the operator device may implement only part of the above. Certain modules of FIG.3 may be internal or connected externally, in which case they do not necessarily form integral part of the device itself. E.g. display 306 may be a display that is connected to a device only under specific circumstances, or the device may be controlled through another device with a display, i.e. no specific display 306 and interface 305 are required for such a device. For the network device 102, the storage medium 311 may contain an agent implemented in software code which, when executed by processor 303 for handling interaction with the blockchain network.

More generally, the storage medium 311 may contain software code which, when executed by processor 303, causes the device to carry out the methods described herein. For example, when the device is a connected device 102, the storage medium contains code for implementing the agent mentioned earlier.

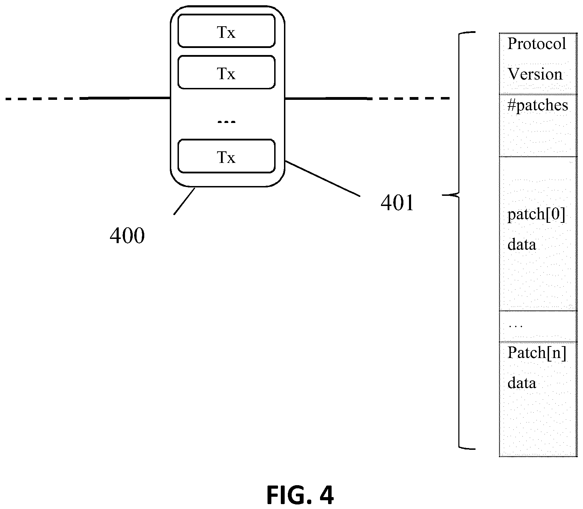

FIG. 4 is a block diagram of a blockchain showing a block 400 and an example of a transaction 400 for a PReq patch request (or a PRep patch report).

According to an exemplary embodiment, a transaction comprises:
- Protocol Version: the current protocol being used by the blockchain network,
- #Patches: the number of patches being provided within the transaction,
- patch[n]: patch number n in the transaction, patch [0] being the first patch
- For each patch[n]: a patch section (either for a patch request or a patch report) with the patch request or report transaction data, e.g. the data from Table 1.
A block may contain a single transactions or a plurality of transactions. A transaction may contain a single patch section or a plurality of patch sections.

The DSC is stored (replicated) on the blockchain but separate from the smart contract SC content. According to an exemplary embodiment, it can be stored on a linked database or simply on selected folders.

## Claims

1. A second device (101) for providing a patch to a first device using a blockchain (104) managed by a blockchain network (103) comprising a plurality of blockchain network devices (105) for providing said patch to said first device (102), said second device comprising:
- means (303) for determining, based on information stored in said blockchain, at least a first device (102) to be patched;
- means for sending (310, 312), to the blockchain network, a patch request (3, 204) comprising patch content data for storage in the blockchain for obtention by said at least first device, and an identifier of said at least first device to be patched, wherein said patch request further comprises at least one prerequisite criterion to be met by said at least first device to allow said patch to be applied;
- means for receiving (310, 312), from the blockchain network, a confirmation (4a, 205a) that the patch request was added to the blockchain;
- means for receiving from said blockchain network a notification (10, 215) when all of said at least first devices to be patched have been successfully patched.

2. The second device according to claim 1, wherein said information stored in said blockchain is a patch status of said at least first device stored.

3. The second device according to claim 1 or 2, wherein said patch request further comprises information indicative of whether said patch is to be pushed by said blockchain network to said at least first device, or whether said patch is to be pulled from said blockchain by said at least first device.

4. A blockchain network device (105) for use in a blockchain network (103) comprising a plurality of blockchain network devices, said blockchain network managing a blockchain (104), for providing a patch to a first device (102), said blockchain network device (105) comprising:
- means for receiving (310, 312), from a second device (101) a patch request comprising patch content data and an identifier of at least a first device (102) to be patched, wherein said patch request further comprises at least one prerequisite criterion to be met by said at least first device to allow said patch to be applied;
- means for determining (303) that said at least first device (102) in said patch request meets said at least one prerequisite criterion;
- means for adding said patch request to the blockchain and for publishing said patch request in said blockchain if said determination is positive;
- means for sending (310, 312), to the second device (101) from which the patch request was received, a confirmation that the patch request was added to the blockchain;
- means (310, 312) for receiving a patch report from at least a first device to be patched, further to application of said patch by said at least first device, said patch report comprising information indicative of the patch operations performed by said at least first device during patch application and information indicative of the actual outcome of said patch application;
- means (9, 213) for determining whether said information indicative of the actual outcome of said patch application matches information indicative of an expected outcome of said patch application in said patch request and in the affirmative, entering (9) information indicative of the update status of the first device from which the patch report was received; and
- means for sending a notification (10, 215) to said second device (101) from which the patch request was received when all of said at least first device (102) to be patched have been successfully patched.

5. The blockchain network device according to claim 4, further comprising means for pushing said patch content data to said at least first device, if said patch request contains an information that the patch is to be pushed to said at least first device.

6. The blockchain network device according to claim 4 or 5, further comprising:
- means for receiving (6, 207) a request from at least a first device to be patched if said patch request contains an information that the patch is to be pulled, said request comprising data identifying the first device having sent the request;
- means for determining whether a patch request containing said identifier is present in the blockchain and in the affirmative sending (208) data indicative of a location of said patch content data within said blockchain to said first device having sent the request enabling said first device having sent the request to obtain said patch content data.

7. A first device (101) for receiving a patch from a blockchain (104) managed by a blockchain network (103) comprising a plurality of blockchain network devices (105), said first device comprising
- means for obtaining content of the patch from the blockchain;
- means for applying the patch using said content; and
- means for sending, when the patch has been correctly applied, a patch report to the blockchain network, said patch report comprising information indicative of patch operations performed by said first device during patch application and information indicative of the actual outcome of said patch application.

8. The first device according to claim 7, wherein said means for obtaining content of the patch are configured to receive said content through a push (5, 206) from a blockchain network device (105).

9. The first device according to claim 7 or 8, wherein said means for obtaining content of the patch are configured to audit the blockchain to determine whether a patch request for patching said first device is present, and in the affirmative for obtaining information from said blockchain enabling said first device to pull said patch content from said blockchain.

10. A method for using a blockchain (104) managed by a blockchain network (103) comprising a plurality of blockchain network devices (105) for providing a patch to a first device (102), said method comprising, at a blockchain network device (105):
- receiving (1, 201), from a second device (101) a patch request comprising patch content data and an identifier of at least a first device (102) to be patched, wherein said patch request further comprises at least one prerequisite criterion to be met by said at least first device to allow said patch to be applied;
- determining (4, 205) that said at least first device (102) in said patch request meets said at least one prerequisite criterion and adding (205a) said patch request to the blockchain and publishing (205b) said patch request in said blockchain if said determination is positive,
- sending (4a, 205a), to the second device (101) from which the patch request was received, a confirmation that the patch request was added to the blockchain
- receiving a patch report from at least a first device to be patched, further to application of said patch by said at least first device, said patch report comprising information indicative of the patch operations performed by said at least first device during patch application and information indicative of the actual outcome of said patch application;
- determining whether said information indicative of the actual outcome of said patch application matches information indicative of an expected outcome of said patch application in said patch request and in the affirmative, entering (9) information indicative of the update status of the first device from which the patch report was received; and
sending a notification (10, 215) to said second device (101) from which the patch request was received when all of said at least first device (102) to be patched have been successfully patched.

11. A method for using a blockchain (104) managed by a blockchain network (103) comprising a plurality of blockchain network devices (105) for providing a patch to a first device (102), said method comprising, at said first device (102):
- obtaining (5, 6, 206, 208) content of the patch from the blockchain;
- applying (7, 210) the patch using said content; and
- when the patch has been correctly applied, sending (8, 212) a patch report to the blockchain network, said patch report comprising information indicative of patch operations performed by said first device during patch application and information indicative of the actual outcome of said patch application.

## Patentansprüche

1. Zweite Vorrichtung (101) zum Bereitstellen eines Patches für eine erste Vorrichtung unter Verwendung einer Blockkette (104), die von einem Blockkettennetzwerk (103) verwaltet wird, das eine Vielzahl von Blockkettennetzwerkvorrichtungen (105) zum Bereitstellen des Patches für die erste Vorrichtung (102) umfasst, wobei die zweite Vorrichtung Folgendes umfasst:
- Mittel (303) zum Bestimmen von mindestens einer ersten Vorrichtung (102), die zu patchen ist, auf Basis von Informationen, die in der Blockkette gespeichert sind;
- Mittel zum Senden (310, 312) einer Patchanforderung (3, 204), die Patchinhaltsdaten zur Speicherung in der Blockkette zum Erhalt durch mindestens die erste Vorrichtung und eine Kennung mindestens der ersten Vorrichtung, die zu patchen ist, an das Blockkettennetzwerk, wobei die Patchanforderung ferner ein vorausgesetztes Kriterium umfasst, das mindestens von der ersten Vorrichtung zu erfüllen ist, um das Anwenden des Patches zu erlauben;
- Mittel zum Empfangen (310, 312) einer Bestätigung (4a, 205a), dass die Patchanforderung zur Blockkette hinzugefügt wurde, vom Blockkettennetzwerk;
- Mittel zum Empfangen einer Benachrichtigung (10, 215), wenn alle mindestens der ersten Vorrichtungen, die zu patchen sind, erfolgreich gepatcht wurden, vom Blockkettennetzwerk.

2. Zweite Vorrichtung nach Anspruch 1, wobei sich die in der Blockkette gespeicherten Informationen auf einen Patchstatus der mindestens ersten gespeicherten Vorrichtung bezieht.

3. Zweite Vorrichtung nach Anspruch 1 oder 2, wobei die Patchanforderung ferner Informationen umfasst, die anzeigen, ob der Patch vom Blockkettennetzwerk mindestens zur ersten Vorrichtung weiterzugeben ist oder ob der Patch von der Blockkette mindestens von der ersten Vorrichtung abzuziehen ist.

4. Blockkettennetzwerkvorrichtung (105) zur Verwendung in einem Blockkettennetzwerk (103), das eine Vielzahl von Blockkettennetzwerkvorrichtungen umfasst, wobei das Blockkettennetzwerk eine Blockkette (104) zum Bereitstellen eines Patches für eine erste Vorrichtung (102) verwaltet, wobei die Blockkettennetzwerkvorrichtung (105) Folgendes umfasst:
- Mittel zum Empfangen (310, 312) einer Patchanforderung, die Patchinhaltsdaten und eine Kennung mindestens einer ersten Vorrichtung (102), die zu patchen ist, umfasst, von einer zweiten Vorrichtung (101), wobei die Patchanforderung ferner ein vorausgesetztes Kriterium umfasst, das mindestens von der ersten Vorrichtung zu erfüllen ist, um das Anwenden des Patches zu erlauben;
- Mittel zum Bestimmen (303), dass mindestens die erste Vorrichtung (102) in der Patchanforderung mindestens das vorausgesetzte Kriterium erfüllt;
- Mittel zum Hinzufügen der Patchanforderung zur Blockkette und zum Veröffentlichen der Patchanforderung in der Blockkette, wenn die Bestimmung positiv ist;
- Mittel zum Senden (310, 312) einer Bestätigung, dass die Patchanforderung zur Blockkette hinzugefügt wurde, an die zweite Vorrichtung (101), von der die Patchanforderung empfangen wurde;
- Mittel (310, 312) zum Empfangen eines Patchberichts mindestens von einer ersten Vorrichtung, die zu patchen ist, ferner zur Anwendung des Patches mindestens durch die erste Vorrichtung, wobei der Patchbericht Informationen, die Patchoperationen anzeigen, die während der Patchanwendung mindestens von der ersten Vorrichtung durchgeführt werden, und Informationen, die das tatsächliche Ergebnis der Patchanwendung anzeigen, umfasst;
- Mittel (9, 213) zum Bestimmen, ob die Informationen die das tatsächliche Ergebnis der Patchanwendung anzeigen, mit Informationen übereinstimmen, die ein erwartetes Ergebnis der Patchanwendung in der Patchanforderung anzeigen, und, wenn ja, Eintragen (9) von Informationen, die den Aktualisierungsstatus der ersten Vorrichtung anzeigen, von der der Patchbericht empfangen wurde; und
- Mittel zum Senden einer Benachrichtigung (10, 215) an die zweite Vorrichtung (101), von der die Patchanforderung empfangen wurde, wenn alle mindestens der ersten Vorrichtung (102), die zu patchen sind, erfolgreich gepatcht wurden.

5. Blockkettennetzwerkvorrichtung nach Anspruch 4, die ferner Mittel zum Weitergeben der Patchinhaltsdaten mindestens an die erste Vorrichtung umfasst, wenn die Patchanforderung Informationen enthält, dass der Patch mindestens an die erste Vorrichtung weiterzugeben ist.

6. Blockkettennetzwerkvorrichtung nach Anspruch 4 oder 5, die ferner Folgendes umfasst:
- Mittel zum Empfangen (6, 207) einer Anforderung mindestens von einer ersten Vorrichtung, die zu patchen ist, wenn die Patchanforderung Informationen enthält, dass der Patch abzuziehen ist, wobei die Anforderung Daten umfasst, die die erste Vorrichtung identifizieren, die die Anforderung gesendet hat;
- Mittel zum Bestimmen, ob eine Patchanforderung, die die Kennung enthält, in der Blockkette vorhanden ist, und, wenn ja, Senden (208) von Daten, die einen Standort der Patchinhaltsdaten in der Blockkette anzeigen, an die erste Vorrichtung, die die Anforderung gesendet hat, wodurch es der ersten Vorrichtung, die die Anforderung gesendet hat, ermöglicht wird, die Patchinhaltsdaten zu erhalten.

7. Erste Vorrichtung (101) zum Empfangen eines Patches von einer Blockkette (104), die von einem Blockkettennetzwerk (103) verwaltet wird, das eine Vielzahl von Blockkettennetzwerkvorrichtungen (105) umfasst, wobei die erste Vorrichtung Folgendes umfasst
- Mittel zum Erhalten eines Inhalts des Patches von der Blockkette;
- Mittel zum Anwenden des Patches unter Verwendung des Inhalts; und
- Mittel zum Senden eines Patchberichts an das Blockkettennetzwerk, wenn der Patch erfolgreich angewandt wurde, wobei der Patchbericht Informationen, die Patchoperationen anzeigen, die von der ersten Vorrichtung während einer Patchanwendung durchgeführt wurden, und Informationen, die das tatsächliche Ergebnis der Patchanwendung anzeigen, umfasst.

8. Erste Vorrichtung nach Anspruch 7, wobei die Mittel zum Erhalten eines Inhalts des Patches dazu ausgelegt sind, den Inhalt über einen Push (5, 206) von einer Blockkettennetzwerkvorrichtung (105) zu empfangen.

9. Erste Vorrichtung nach Anspruch 7 oder 8, wobei die Mittel zum Erhalten eines Inhalts des Patches dazu ausgelegt sind, die Blockkette zu auditieren, um zu bestimmen, ob eine Patchanforderung zum Patchen der ersten Vorrichtung vorhanden ist, und, wenn ja, zum Erhalten von Informationen von der Blockkette, die es der ersten Vorrichtung ermöglichen, den Patchinhalt von der Blockkette abzuziehen.

10. Verfahren zum Verwenden einer Blockkette (104), die von einem Blockkettennetzwerk (103) verwaltet wird, das eine Vielzahl von Blockkettennetzwerkvorrichtungen (105) zum Bereitstellen eines Patches für eine erste Vorrichtung (102) umfasst, wobei das Verfahren an einer Blockkettennetzwerkvorrichtung (105) Folgendes umfasst:
- Empfangen (1, 201) einer Patchanforderung, die Patchinhaltsdaten und eine Kennung mindestens einer ersten Vorrichtung (102), die zu patchen ist, umfasst, von einer zweiten Vorrichtung (101), wobei die Patchanforderung ferner ein vorausgesetztes Kriterium umfasst, das mindestens von der ersten Vorrichtung zu erfüllen ist, um das Anwenden des Patches zu erlauben;
- Bestimmen (4, 205), dass mindestens die erste Vorrichtung (102) in der Patchanforderung mindestens ein vorausgesetztes Kriterium erfüllt, und Hinzufügen (205a) der Patchanforderung zur Blockkette und Veröffentlichen (205b) der Patchanforderung in der Blockkette, wenn die Bestimmung positiv ist,
- Senden (4a, 205a) einer Bestätigung, dass die Patchanforderung zur Blockkette hinzugefügt wurde, an die zweite Vorrichtung (101), von der die Patchanforderung empfangen wurde
- Empfangen eines Patchberichts mindestens von einer ersten Vorrichtung, die zu patchen ist, ferner zur Anwendung des Patches mindestens durch die erste Vorrichtung, wobei der Patchbericht Informationen, die Patchoperationen anzeigen, die während der Patchanwendung mindestens von der ersten Vorrichtung durchgeführt werden, und Informationen, die das tatsächliche Ergebnis der Patchanwendung anzeigen, umfasst;
- Bestimmen, ob die Informationen die das tatsächliche Ergebnis der Patchanwendung anzeigen, mit Informationen übereinstimmen, die ein erwartetes Ergebnis der Patchanwendung in der Patchanforderung anzeigen, und, wenn ja, Eintragen (9) von Informationen, die den Aktualisierungsstatus der ersten Vorrichtung anzeigen, von der der Patchbericht empfangen wurde; und
- Senden einer Benachrichtigung (10, 215) an die zweite Vorrichtung (101), von der die Patchanforderung empfangen wurde, wenn alle mindestens der ersten Vorrichtung (102), die zu patchen sind, erfolgreich gepatcht wurden.

11. Verfahren zum Verwenden einer Blockkette (104), die von einem Blockkettennetzwerk (103) verwaltet wird, das eine Vielzahl von Blockkettennetzwerkvorrichtungen (105) zum Bereitstellen eines Patches für eine erste Vorrichtung (102) umfasst, wobei das Verfahren an der ersten Vorrichtung (102) Folgendes umfasst:
- Erhalten (5, 6, 206, 208) eines Inhalts des Patches von der Blockkette;
- Anwenden (7, 210) des Patches unter Verwendung des Inhalts; und
- Senden (8, 212) eines Patchberichts an das Blockkettennetzwerk, wenn der Patch erfolgreich angewandt wurde, wobei der Patchbericht Informationen, die Patchoperationen anzeigen, die von der ersten Vorrichtung während einer Patchanwendung durchgeführt wurden, und Informationen, die das tatsächliche Ergebnis der Patchanwendung anzeigen, umfasst.

## Revendications

1. Deuxième dispositif (101) pour fournir un correctif à un premier dispositif en utilisant une chaîne de blocks (104) gérée par un réseau de chaîne de blocks (103) comprenant une pluralité de dispositifs de réseau de chaîne de blocks (105) pour fournir ledit correctif audit premier dispositif (102), ledit deuxième dispositif comprenant :
- des moyens (303) pour déterminer, sur la base d'informations stockées dans ladite chaîne de blocks, au moins un premier dispositif (102) à corriger ;
- des moyens pour envoyer (310, 312) au réseau de chaîne de blocks une demande de correctif (3, 204) comprenant des données de contenu de correctif à stocker dans la chaîne de blocks pour leur obtention par ledit au moins un premier dispositif, et un identifiant dudit au moins un premier dispositif à corriger, dans lequel ladite demande de correctif comprend en outre au moins un critère de préalable devant être rempli par ledit au moins un premier dispositif pour permettre l'application dudit correctif ;
- des moyens pour recevoir (310, 312) du réseau de chaîne de blocks une confirmation (4a, 205a) d'ajout de la demande de correctif à la chaîne de blocks ;
- des moyens pour recevoir une notification (10, 215) dudit réseau de chaîne de blocks lorsque ledit ou lesdits premiers dispositifs à corriger ont tous été corrigés avec succès.

2. Deuxième dispositif selon la revendication 1, dans lequel lesdites informations stockées dans ladite chaîne de blocks sont un statut de correctif dudit au moins un premier dispositif stocké.

3. Deuxième dispositif selon la revendication 1 ou 2, dans lequel ladite demande de correctif comprend en outre des informations indiquant si ledit correctif doit être poussé par ledit réseau de chaîne de blocks vers ledit au moins un premier dispositif, ou si ledit correctif doit être tiré de ladite chaîne de blocks par ledit au moins un premier dispositif.

4. Dispositif de réseau de chaîne de blocks (105) destiné à être utilisé dans un réseau de chaîne de blocks (103) comprenant une pluralité de dispositifs de réseau de chaîne de blocks, ledit réseau de chaîne de blocks gérant une chaîne de blocks (104) pour fournir un correctif à un premier dispositif (102), ledit dispositif de réseau de chaîne de blocks (105) comprenant :
- des moyens pour recevoir (310, 312) d'un deuxième dispositif (101) une demande de correctif comprenant des données de contenu de correctif et un identifiant d'au moins un premier dispositif (102) à corriger, dans lequel ladite demande de correctif comprend en outre au moins un critère de préalable devant être rempli par ledit au moins un premier dispositif pour permettre l'application dudit correctif ;
- des moyens pour déterminer (303) que ledit au moins un premier dispositif (102) dans ladite demande de correctif répond audit au moins un critère de préalable ;
- des moyens pour ajouter ladite demande de correctif à la chaîne de blocks et pour publier ladite demande de correctif dans ladite chaîne de blocks si ladite détermination est positive ;
- des moyens pour envoyer (310, 312), au deuxième dispositif (101) duquel la demande de correctif a été reçue, une confirmation d'ajout de la demande de correctif à la chaîne de blocks ;
- des moyens (310, 312) pour recevoir un rapport de correctif d'au moins un premier dispositif à corriger suite à l'application dudit correctif par ledit au moins un premier dispositif, ledit rapport de correctif comprenant des informations indiquant les opérations de correctif effectuées par ledit au moins un premier dispositif au cours d'une application de correctif et des informations indiquant le résultat réel de ladite application de correctif ;
- des moyens (9, 213) pour déterminer si lesdites informations indiquant le résultat réel de ladite application de correctif concordent avec des informations indiquant un résultat attendu de ladite application de correctif dans ladite demande de correctif, et dans l'affirmative, entrer (9) des informations indiquant le statut de mise à jour du premier dispositif duquel le rapport de correctif a été reçu ; et
- des moyens pour envoyer une notification (10, 215) audit deuxième dispositif (101) duquel la demande de correctif a été reçue lorsque ledit ou lesdits premiers dispositifs (102) à corriger ont tous été corrigés avec succès.

5. Dispositif de réseau de chaîne de blocks selon la revendication 4, comprenant en outre des moyens pour pousser lesdites données de contenu de correctif vers ledit au moins un premier dispositif si ladite demande de correctif contient des informations selon lesquelles le correctif doit être poussé vers ledit au moins un premier dispositif.

6. Dispositif de réseau de chaîne de blocks selon la revendication 4 ou 5, comprenant en outre :
- des moyens pour recevoir (6, 207) une demande d'au moins un premier dispositif à corriger si ladite demande de correctif contient des informations selon lesquelles le correctif doit être tiré, ladite demande comprenant des données identifiant le premier dispositif qui a envoyé la demande ;
- des moyens pour déterminer si une demande de correctif contenant ledit identifiant est présente dans la chaîne de blocks, et dans l'affirmative, envoyer (208) des données indiquant un emplacement desdites données de contenu de correctif dans ladite chaîne de blocks audit premier dispositif qui a envoyé la demande, ce qui permet audit premier dispositif qui a envoyé la demande d'obtenir lesdites données de contenu de correctif.

7. Premier dispositif (101) pour recevoir un correctif d'une chaîne de blocks (104) gérée par un réseau de chaîne de blocks (103) comprenant une pluralité de dispositifs de réseau de chaîne de blocks (105), ledit premier dispositif comprenant
- des moyens pour obtenir un contenu du correctif à partir de la chaîne de blocks ;
- des moyens pour appliquer le correctif en utilisant ledit contenu ; et
- des moyens pour envoyer un rapport de correctif au réseau de chaîne de blocks lorsque le correctif a été appliqué correctement, ledit rapport de correctif comprenant des informations indiquant des opérations de correctif effectuées par ledit premier dispositif au cours d'une application de correctif et des informations indiquant le résultat réel de ladite application de correctif.

8. Premier dispositif selon la revendication 7, dans lequel lesdits moyens pour obtenir un contenu du correctif sont configurés pour recevoir ledit contenu par une poussée (5, 206) d'un dispositif de réseau de chaîne de blocks (105).

9. Premier dispositif selon la revendication 7 ou 8, dans lequel lesdits moyens pour obtenir un contenu du correctif sont configurés pour vérifier la chaîne de blocks afin de déterminer si une demande de correctif pour corriger ledit premier dispositif est présente, et dans l'affirmative, pour obtenir des informations de ladite chaîne de blocks permettant audit premier dispositif de tirer ledit correctif contenu de ladite chaîne de blocks.

10. Procédé d'utilisation d'une chaîne de blocks (104) gérée par un réseau de chaîne de blocks (103) comprenant une pluralité de dispositifs de réseau de chaîne de blocks (105) pour fournir un correctif à un premier dispositif (102), ledit procédé comprenant les étapes suivantes, au niveau d'un dispositif de réseau de chaîne de blocks (105) :
- recevoir (1,201) d'un deuxième dispositif (101) une demande de correctif comprenant des données de contenu de correctif et un identifiant d'au moins un premier dispositif (102) à corriger, dans lequel ladite demande de correctif comprend en outre au moins un critère de préalable devant être rempli par ledit au moins un premier dispositif pour permettre l'application dudit correctif ;
- déterminer (4, 205) que ledit au moins un premier dispositif (102) dans ladite demande de correctif répond audit au moins un critère de préalable, ajouter (205a) ladite demande de correctif à la chaîne de blocks et publier (205b) ladite demande de correctif dans ladite chaîne de blocks si ladite détermination est positive,
- envoyer (4a, 205a), au deuxième dispositif (101) duquel la demande de correctif a été reçue, une confirmation d'ajout de la demande de correctif à la chaîne de blocks,
- recevoir un rapport de correctif d'au moins un premier dispositif à corriger suite à l'application dudit correctif par ledit au moins un premier dispositif, ledit rapport de correctif comprenant des informations indiquant les opérations de correctif effectuées par ledit au moins un premier dispositif au cours d'une application de correctif et des informations indiquant le résultat réel de ladite application de correctif ;
- déterminer si lesdites informations indiquant le résultat réel de ladite application de correctif concordent avec des informations indiquant un résultat attendu de ladite application de correctif dans ladite demande de correctif, et dans l'affirmative, entrer (9) des informations indiquant le statut de mise à jour du premier dispositif duquel le rapport de correctif a été reçu ; et
- envoyer une notification (10, 215) audit deuxième dispositif (101) duquel la demande de correctif a été reçue lorsque ledit ou lesdits premiers dispositifs (102) à corriger ont tous été corrigés avec succès.

11. Procédé d'utilisation d'une chaîne de blocks (104) gérée par un réseau de chaîne de blocks (103) comprenant une pluralité de dispositifs de réseau de chaîne de blocks (105) pour fournir un correctif à un premier dispositif (102), ledit procédé comprenant les étapes suivantes, au niveau dudit premier dispositif (102) :
- obtenir (5, 6, 206, 208) un contenu du correctif à partir de la chaîne de blocks ;
- appliquer (7, 210) le correctif en utilisant ledit contenu ; et
- envoyer (8, 212) un rapport de correctif au réseau de chaîne de blocks lorsque le correctif a été appliqué correctement, ledit rapport de correctif comprenant des informations indiquant des opérations de correctif effectuées par ledit premier dispositif au cours d'une application de correctif et des informations indiquant le résultat réel de ladite application de correctif.
